# FASCICULE DE BREVET EUROPEEN

(11) **EP 0 379 696 B1**
(45) Date de publication et mention de la délivrance du brevet: **09.02.1994**
(21) Numéro de dépôt: 89123207.6
(22) Date de dépôt: 15.12.1989
(51) Int. Cl.: H02M 3/28, G05F 1/62

(54) **Convertisseur élévateur de tension à enroulement de récupération de l'énergie de démagnétisation**
Spannungserhöhungskonverter mit Entmagnetisierungs-Energierückgewinnungswicklung
Voltage-boosting converter with a demagnetization energy recuperation coil

(30) Priorité: 23.12.1988 FR 8817103
(43) Date de publication de la demande: 01.08.1990
(73) Titulaire: ALCATEL BUSINESS SYSTEMS, F-75008 Paris (FR)
(72) Inventeur: Misslin, Gilles, F-67200 Strasbourg (FR)
(74) Mandataire: Weinmiller, Jürgen

(56) Documents cités:
- FR-A- 1 370 324
- PATENT ABSTRACTS OF JAPAN vol. 5, no. 7 (E-41)(679) 17 janvier 1981, & JP-A-55 136870 (TOKYO SHIBAURA DENKI K.K.) 25 octobre 1980,
- PATENT ABSTRACTS OF JAPAN vol. 11, no. 138 (E-503)(2585) 02 mai 1987, & JP-A-61 277373 (NIPPON TELEGR.& TELEPH. CORP.) 08 décembre 1986,

## Description

La présente invention concerne un convertisseur élévateur de tension, à partir d'une source de courant continu, comprenant un hacheur de courant, un transformateur dont l'enroulement primaire est en série avec le hacheur, et dont le secondaire est relié à un circuit de redressement et de filtrage en série avec lui, lui-même relié à un circuit d'utilisation, une boucle de mise en série du circuit d'utilisation reliée au secondaire et à la source d'alimentation, et un enroulement de récupération de l'énergie de démagnétisation.

On sait que le rendement d'un convertisseur élévateur de tension est relativement faible, de l'ordre de 50 % à 75 %.

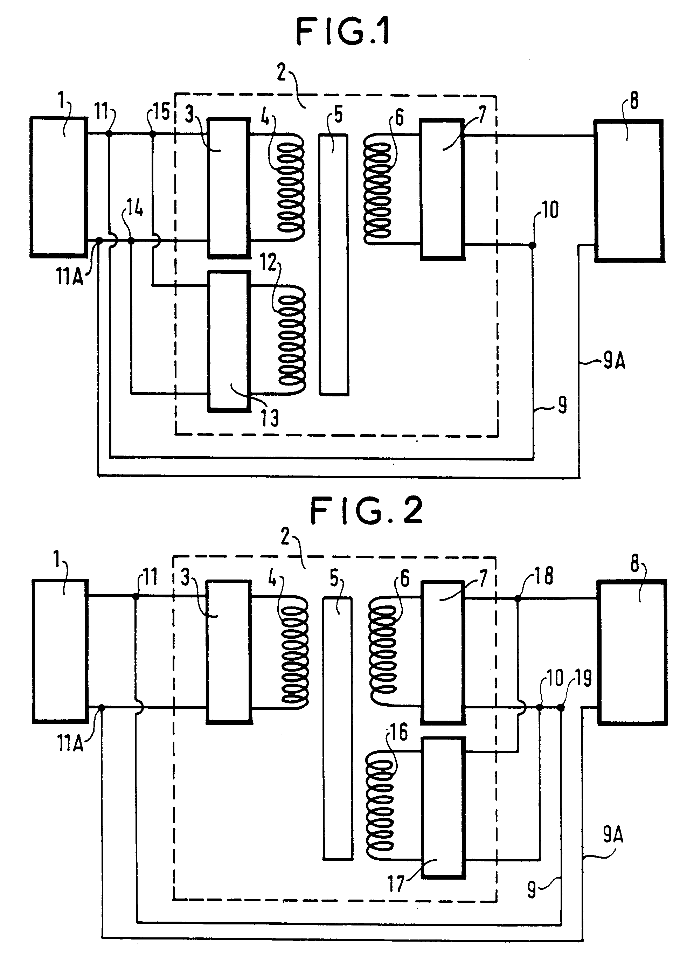

On a déjà proposé pour l'améliorer de mettre en série la sortie d'énergie du convertisseur avec la source d'alimentation. Lorsque le convertisseur est du type à démagnétisation, on a prévu de renvoyer l'énergie de démagnétisation vers la source, selon le schéma de la figure 1 du dessin annexé. Un tel convertisseur est connu par usage public.

Dans un tel convertisseur, celui-ci, désigné par la référence générale 2, est relié en amont à la source d'alimentation continue 1. Il comprend un hacheur 3, un enroulement primaire de transformateur 4, un noyau magnétique 5, un enroulement secondaire 6, et un circuit de redressement et de filtrage 7, relié lui-même un circuit d'utilisation 8. Une boucle de mise en série 9 relie une borne 10 à la sortie du circuit de redressement et de filtrage à une borne 11 à la sortie de la source d'alimentation. Une seconde boucle 9A relie l'entrée du circuit d'utilisation à la masse de la source d'alimentation 1 (borne 11A). Par ailleurs, un enroulement de démagnétisation 12 du côté primaire du transformateur est relié par l'intermédiaire d'un circuit de redressement et de filtrage 13 aux bornes 14, 15 d'entrée du hacheur 3. On assure bien une récupération de l'énergie de démagnétisation, mais cependant avec le rendement propre du convertisseur, qui doit par ailleurs être dimensionné de façon suffisante pour convertir le complément d'énergie qui doit le traverser.

La présente invention a pour but de procurer un convertisseur élévateur de tension procurant un meilleur rendement de transmission de l'énergie d'entrée, et de dimensionnement réduit par rapport au convertisseur connu ci-dessus.

Le convertisseur selon l'invention est caractérisé en ce que son enroulement de récupération de l'énergie de démagnétisation est sur le côté secondaire du transformateur, et en ce qu'il est relié aux bornes de circuit d'utilisation en aval du circuit de redressement et de filtrage.

Il est décrit ci-après, à titre d'exemple et en référence à la figure 2 du dessin annexé, un convertisseur élévateur de tension selon l'invention.

La source d'alimentation continue 1 est reliée au hacheur 3 et à l'enroulement primaire 4 du convertisseur 2. Sur le noyau magnétique 5 est disposé en premier lieu du côté secondaire l'enroulement 6, relié au circuit de redressement et de filtrage 7, lui-même relié au circuit d'utilisation 8. Comme dans le circuit connu, une boucle de mise en série 9 relie une borne 10 à la sortie du circuit de redressement et de filtrage à une borne 11 à la sortie de la source d'alimentation. Une seconde boucle 9A relie l'entrée du circuit d'utilisation 8 à la masse d'alimentation 1 (borne 11A).

Par ailleurs, un enroulement de démagnétisation 16 est disposé sur le secondaire du transformateur et relié par un circuit de redressement et de filtrage 17 aux bornes 18, 10 à la sortie du circuit de redressement et de filtrage principal, en amont du circuit d'utilisation 8. On assure ainsi une récupération directe de l'énergie de démagnétisation, sans passer par le convertisseur, en évitant la perte de rendement à la traversée de celui-ci et sans avoir à le surdimensionner. Le rendement du convertisseur est amélioré d'environ 20% par rapport à celui d'un convertisseur tel que celui représenté en figure 1.

## Revendications

1. Convertisseur élévateur de tension, à partir d'une source de courant continu (1), comprenant un hacheur de courant (3), un transformateur dont l'enroulement primaire (4) est en série avec le hacheur, et dont le secondaire (6) est relié à un circuit de redressement et de filtrage (7) en série avec lui, lui-même relié à un circuit d'utilisation (8), une boucle (9) de mise en série du circuit d'utilisation reliée au secondaire et à la source d'alimentation, et un enroulement de récupération de l'énergie de démagnétisation, caractérisé en ce que l'enroulement de récupération de l'énergie de démagnétisation (16) est relié aux bornes (18, 10) du circuit d'utilisation en aval du circuit de redressement et de filtrage (7).

## Claims

1. A voltage-raising converter powered from a DC supply (1), the converter comprising a current chopper (3), a transformer whose primary winding (4) is in series with the chopper, and whose secondary (6) is connected to a rectifier and filter circuit (7) in series therewith, and itself connected to a load circuit (8), a load circuit series connection loop (9) connected to the secondary and to the DC supply, and a winding for recovering demagnetization energy, the converter being characterized in that the winding (16) for recovering the demagnetization energy is connected to the terminals (18, 10) of the load circuit downstream from the rectifier and filter circuit (7).

## Patentansprüche

1. Wandler zur Erhöhung einer Spannung ausgehend von einer Gleichstromquelle (1), mit einem Stromzerhacker (3), einem Transformator, dessen Primärwicklung (4) mit dem Zerhacker in Reihe liegt und dessen Sekundärwicklung (6) in Reihe mit einem Gleichrichtungs- und Filterkreis (7) verbunden ist, der seinerseits mit einem Lastkreis (8) verbunden ist, mit einer Lastkreisreihenschleife (9), die die Sekundärwicklung und die Speisequelle verbindet, und mit einer Wicklung zur Rückgewinnung der Entmagnetisierungsenergie, dadurch gekennzeichnet, daß die Wicklung zur Wiedergewinnung der Entmagnetisierungsenergie (16) mit den Klemmen (18, 10) des Lastkreises stromabwärts hinter dem Gleichrichtungs- und Filterkreis (7) verbunden ist.
